# EUROPEAN PATENT APPLICATION

(11) **EP 4 807 640 A1**
(43) Date of publication of application: **16.09.2026**
(21) Application number: 24887861.3
(22) Date of filing: 01.11.2024
(51) Int. Cl.: G06Q 10/047

(54) **CARBON EMISSION REDUCTION AND CARBON SINK INCREASE PATH COORDINATION AND OPTIMIZATION METHOD AND SYSTEM**

(30) Priority: 09.11.2023 CN 202311486194
(71) Applicant: Nari Technology Co., Ltd., Jiangsu 211106 (CN); NARI Group Corporation, Nanjing, Jiangsu 211106 (CN)
(72) Inventor: XUE, Yusheng, Nanjing, Jiangsu 211106 (CN); CAI, Bin, Nanjing, Jiangsu 211106 (CN); XUE, Feng, Nanjing, Jiangsu 211106 (CN); YANG, Mingyu, Nanjing, Jiangsu 211106 (CN)
(74) Representative: Murgitroyd & Company
(86) International application number: PCT/CN2024/129238
(87) International publication number: WO 2025/098249

(57) **Abstract**

Disclosed in the present invention are a carbon emission reduction and carbon sink increase path coordination and optimization method and system. The method comprises: on the basis of a given carbon emission target value and a given carbon sink target value, generating a carbon emission time series trajectory and a carbon sink time series trajectory; by taking the carbon emission time series trajectory as an input, performing overall coordination of emission reduction measures by means of an optimal distribution of carbon emission budgets between departments/industries and the coordination and optimization of carbon emission reduction implementation paths of the departments/industries; by taking the carbon sink time series trajectory as an input, performing overall coordination of carbon sink increase approaches by means of an optimal distribution of a carbon sink demand between a technical carbon sink and a natural carbon sink and the coordination and optimization on two sink increase approach implementation paths; and constructing an objective function, and performing carbon trajectory optimization and final carbon state optimization on the basis of a carbon emission reduction path optimization result and a carbon sink increase path optimization result. In the present invention, the spatio-temporal complementary characteristics of carbon emission reduction and carbon sink increases are used to reduce the total economic cost within a transformation period, the influence of complex nonlinear factors can be reflected, and an optimization result is not prone to changing greatly along with tiny changes in parameters.

## Description

### TECHNICAL FIELD

The present disclosure relates to the technical field of low-carbon development planning, and in particular, to a method and a system for coordinated optimization of carbon emission reduction and carbon sequestration enhancement paths.

### BACKGROUND

The harmonious coexistence of human beings and nature has been an eternal theme of economic and social development. However, since the Industrial Revolution, excessive emissions of greenhouse gases caused by energy utilization have led to the greenhouse effect and climate imbalance on the earth's surface, thereby posing a huge threat to the survival of human beings themselves, and green and low-carbon development has become a consensus of the whole society. The key to addressing climate change lies in "carbon control". For all object systems facing carbon neutrality targets (for example, China, a certain province of China, or a traditional energy enterprise), achieving low-carbon development in an optimal manner requires optimization of carbon emission reduction measures and carbon sequestration enhancement measures that have coordinated planning space in terms of technical-economic-environmental characteristics.

Optimization of low-carbon development paths is a complex nonlinear problem. Currently, related methods simplify the original problem into a mixed integer linear programming problem, and optimize low-carbon measure paths within each time step according to the technical, economic, and environmental parameters of various types of low-carbon measures. The limitations of the above methods mainly include: failure to reflect nonlinear factors of the low-carbon development path optimization problem; slight changes in technical, economic, and environmental parameters may cause substantial changes in optimization results, thereby failing to provide robust decision-making and planning support for decision makers facing low-carbon transition tasks; and failure to distinguish between carbon emission reduction and carbon sequestration enhancement during low-carbon development planning, which is not conducive to matching appropriate development targets and paths for the two types of technologies based on their respective development stages and characteristics.

### SUMMARY

Objective of the present disclosure: The present disclosure aims to provide a method and a system for coordinated optimization of carbon emission reduction and carbon sequestration enhancement paths, which reflect the impact of complex nonlinear factors and match respective development stages and characteristics of emission reduction technologies and sequestration enhancement technologies.

Technical solution: Provided is a method for coordinated optimization of carbon emission reduction and carbon sequestration enhancement paths according to the present disclosure, which includes the following steps:
(1) generating carbon emission amount and carbon sequestration amount time-series trajectories based on given target values of carbon emission amount and carbon sequestration amount;
(2) taking the carbon emission amount time-series trajectory as an input, and constructing a carbon emission reduction path optimization module through optimized allocation of carbon emission budgets among various sectors/industries and coordination and optimization of carbon emission reduction implementation paths of the various sectors/industries;
(3) taking the carbon sequestration amount time-series trajectory as an input, and constructing a carbon sequestration enhancement path optimization module through optimized allocation of carbon sequestration amount demand between technological carbon sequestration and natural carbon sequestration and coordination and optimization of implementation paths of the two types of sequestration enhancement approaches; and
(4) constructing an objective function involving economic costs associated with various types of carbon emission reduction and carbon sequestration enhancement, and based on optimization results of the carbon emission reduction path optimization module and the carbon sequestration enhancement path optimization module, firstly performing carbon trajectory optimization, matching development paths of carbon emission reduction with development paths of carbon sequestration enhancement, and searching for carbon emission amount and carbon sequestration amount trajectory settings that improve an objective function value until the objective function value can no longer be improved; and then performing carbon end-state optimization, considering division of a target task between carbon emission reduction and carbon sequestration enhancement, and searching for target values of carbon emission amount and carbon sequestration amount that improve the objective function value until the objective function value can no longer be improved.

Preferably, generating the carbon emission amount and carbon sequestration amount time-series trajectories in step (1) includes:
the carbon emission amount time-series trajectory including a time-series trajectory exogenously generated based on different curve shapes from two points *tₛₜₐᵣₜ,* ${ce}_{start}^{0}$ and *t_{end}*, ${ce}_{end}^{0}$, and the carbon sequestration amount time-series trajectory including a time-series trajectory exogenously generated based on different curve shapes from two points *tₛₜₐᵣₜ,* ${cs}_{start}^{0}$ and *t_{end},* ${cs}_{end}^{0}$, where *tₛₜₐᵣₜ*, ${ce}_{start}^{0}$, and ${cs}_{start}^{0}$ respectively represent a start time, and an initial value of carbon emission amount and an initial value of carbon sequestration amount corresponding to the start time; and *t_{end}*, ${ce}_{end}^{0}$, and ${cs}_{end}^{0}$ respectively represent a planning end time, and an initial value of carbon emission amount and an initial value of carbon sequestration amount corresponding to the planning end time.

Preferably, the coordination and optimization of the carbon emission reduction implementation paths of the various sectors/industries in step (2) include coordination of carbon emission reduction implementation paths among the various sectors/industries and optimization of carbon emission reduction implementation paths within the various sectors/industries; and the coordination of the carbon emission reduction implementation paths among the various sectors/industries refers to maximizing synergistic effects of emission reduction measures of the various sectors/industries through coordination of the emission reduction measures.

Preferably, the optimization of the carbon emission reduction implementation paths within the various sectors/industries refers to adjusting types and implementation intensities of emission reduction measures of the sectors/industries to minimize economic costs of carbon emission reduction under a condition that the carbon emission amount satisfies a budget requirement.

Preferably, the technological carbon sequestration in step (3) is a sequestration enhancement approach in which carbon dioxide is removed from industrial production, energy utilization, or the atmosphere and stored for a long term through carbon capture, utilization, and storage technologies; and the natural carbon sequestration is a sequestration enhancement approach for improving ecological carbon sequestration capacity.

Preferably, the coordination and optimization of the implementation paths of the two types of sequestration enhancement approaches in step (3) include coordination of the implementation paths among the two types of sequestration enhancement approaches and optimization of implementation paths within each sequestration enhancement approach; and the implementation paths among the two types of sequestration enhancement approaches refers to maximizing complementary synergistic effects between the two types of sequestration enhancement measures through coordination of the sequestration enhancement measures. Preferably, the optimization of the implementation paths within each sequestration enhancement approach refers to adjusting types and implementation intensities of sequestration enhancement measures to minimize economic costs of carbon sequestration enhancement under a condition that the sequestration enhancement amount satisfies carbon sequestration demand.

Preferably, the carbon trajectory optimization in step (4) refers to optimizing the carbon emission amount and carbon sequestration amount time-series trajectories under given carbon emission amount and carbon sequestration amount targets, and specifically includes: calculating optimal carbon emission reduction and carbon sequestration enhancement implementation paths under given carbon emission amount and carbon sequestration amount time-series trajectories, identifying the given carbon emission amount and carbon sequestration amount time-series trajectories with the optimal carbon emission reduction and carbon sequestration enhancement implementation paths, obtaining optimal implementation paths under different carbon emission amount and carbon sequestration amount time-series trajectory settings, and searching therefrom for carbon emission amount and carbon sequestration amount trajectory settings that improve the objective function value until the objective function value can no longer be improved.

Preferably, the carbon end-state optimization in step (4) refers to optimization of target values of carbon emission amount and carbon sequestration amount, and specifically includes: determining coordinated optimal trajectories of carbon emission amount and carbon sequestration amount corresponding to each target setting value of carbon emission amount/carbon sequestration amount by aggregating results of optimization of the carbon emission amount and carbon sequestration amount trajectories, comparing the optimal trajectories under different target setting values of carbon emission amount/carbon sequestration amount, and searching for target values of carbon emission amount and carbon sequestration amount that improve the objective function value until the objective function value can no longer be improved.

Preferably, the objective function in step (4) refers to minimization of risk costs or maximization of risk benefits taking uncertainty factors into consideration.

Provided is a system for coordinated optimization of carbon emission reduction and carbon sequestration enhancement paths according to the present disclosure, which includes:
a carbon emission reduction path optimization module, configured to obtain an optimized carbon emission reduction path under a given carbon emission amount time-series trajectory through optimized allocation of carbon emission budgets among various sectors/industries and coordination and optimization of carbon emission reduction implementation paths of the various sectors/industries;
a carbon sequestration enhancement path optimization module, configured to obtain an optimized carbon sequestration enhancement path under a given carbon sequestration amount time-series trajectory through optimized allocation of carbon sequestration amount demand between technological carbon sequestration and natural carbon sequestration and coordination and optimization of implementation paths of the two types of sequestration enhancement approaches; and
a carbon emission reduction and carbon sequestration enhancement coordination module, configured to aggregate optimization results of the carbon emission reduction path optimization module and the carbon sequestration enhancement path optimization module, perform carbon trajectory optimization and carbon end-state optimization based on an objective function, consider matching between development paths of carbon emission reduction and carbon sequestration enhancement and division of a target task between carbon emission reduction and carbon sequestration enhancement, respectively search for carbon emission amount and carbon sequestration amount trajectory settings and target value settings that improve an objective function value until the objective function value can no longer be improved, and output optimal carbon emission reduction and carbon sequestration enhancement implementation paths.

Beneficial effects: Compared with the prior art, the present disclosure has the following remarkable advantages: nonlinear factors of the low-carbon development path optimization problem can be reflected; the low-carbon development path optimization problem is transformed into optimization of carbon emission reduction paths, optimization of carbon sequestration enhancement paths, and coordination between the optimization of carbon emission reduction paths and the optimization of carbon sequestration enhancement paths, such that appropriate development paths can be matched based on the respective development stages and characteristics of emission reduction technologies and sequestration enhancement technologies, and the total economic cost in the transition period can be reduced by utilizing the spatiotemporal complementary characteristics of carbon emission reduction and carbon sequestration enhancement in terms of technology, economy, environment, and the like; and the present disclosure is a post-evaluation method based on preset trajectories, which can take specified low-carbon development targets into account, and optimization results will not substantially change due to slight parameter variations, thereby providing robust decision-making and planning support for decision makers facing low-carbon transition tasks.

### BRIEF DESCRIPTION OF THE DRAWING

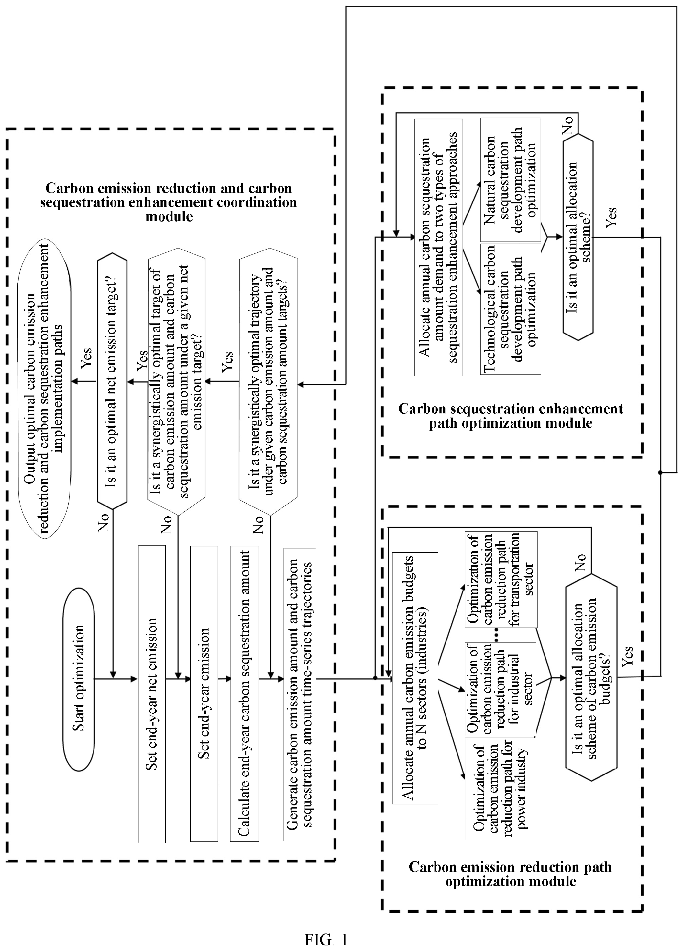

FIG. 1 is a flowchart of the method according to the present disclosure.

### DETAILED DESCRIPTION

The technical solution of the present disclosure is further described below with reference to the drawing.

As shown in FIG. 1, the method for coordinated optimization of carbon emission reduction and carbon sequestration enhancement paths according to the present disclosure is used for low-carbon development planning of a country/region/enterprise, and includes constructing two inner-layer optimization submodules and one outer-layer coordination submodule, where the two inner-layer optimization submodules refer to a carbon emission reduction path optimization module and a carbon sequestration enhancement path optimization module, and the outer-layer coordination sub-module refers to a carbon emission reduction and carbon sequestration enhancement coordination module. Specifically, the method includes the following steps.
(1) Carbon emission amount and carbon sequestration amount time-series trajectories are generated based on given target values of carbon emission amount and carbon sequestration amount. The following steps are specifically included.
   For the carbon emission amount, in a two-dimensional plane with time as the horizontal axis and carbon emission amount as the vertical axis, the initial value of the carbon emission amount time-series trajectory is determined by a time-series trajectory between two points $\left[{t}_{start}, {ce}_{start}^{0}\right]$ and $\left[{t}_{end}, {ce}_{end}^{0}\right]$, and the time-series trajectory can be exogenously specified based on different curve shapes, where *tₛₜₐᵣₜ*, ${ce}_{start}^{0}$ respectively represent a start time and an initial value of the carbon emission amount at the start time; and *t_{end}*, ${ce}_{end}^{0}$ respectively represent an end time and an initial value of the carbon emission amount at the end time.
   For the carbon sequestration amount, in a two-dimensional plane with time as the horizontal axis and carbon sequestration amount as the vertical axis, the initial value of the carbon sequestration amount time-series trajectory is determined by a time-series trajectory between two points $\left[{t}_{start}, {cs}_{start}^{0}\right]$ and $\left[{t}_{end}, {cs}_{end}^{0}\right]$, and the time-series trajectory can be exogenously specified based on different curve shapes, where *tₛₜₐᵣₜ*, ${cs}_{start}^{0}$ respectively represent a start time and an initial value of the carbon sequestration amount at the start time; and *t_{end}*, ${cs}_{end}^{0}$ respectively represent a planning end time and an initial value of the carbon sequestration amount at the end time.
(2) A carbon emission reduction path optimization module is constructed to achieve overall coordination within emission reduction measures. With the carbon emission amount time-series trajectory as an input, an optimized carbon emission reduction path is obtained through optimized allocation of carbon emission budgets among various sectors (industries) and coordination and optimization of carbon emission reduction implementation paths of the various sectors (industries), and whether the optimized carbon emission reduction path is the optimal allocation scheme of the carbon emission budgets is determined; if yes, the optimized carbon emission reduction path is output, and if not, budget allocation and optimization of carbon emission reduction path are performed again.

The optimized allocation of carbon emission budgets among various sectors (industries) refers to, in combination with technical accessibility and economic rationality of different sectors (industries) in carbon emission reduction, first setting an initial value of annual carbon emission budget allocation, and then performing optimized adjustment on the carbon emission budget allocation based on comprehensive optimization results of the carbon emission reduction paths under the carbon budget allocation until the objective function value cannot be further improved.

The coordination and optimization of the carbon emission reduction implementation paths of the various sectors (industries) include coordination of carbon emission reduction implementation paths among the various sectors (industries) and optimization of carbon emission reduction implementation paths within the various sectors (industries).

The coordination of the carbon emission reduction implementation paths among the various sectors (industries) refers to maximizing synergistic effects of emission reduction measures of the various sectors (industries) through coordination of the emission reduction measures. For example, implementation of electric arc furnace steelmaking in the steel industry and development of new energy in the electric power industry have synergistic effects.

The optimization of the carbon emission reduction implementation paths within the various sectors (industries) refers to adjusting types and implementation intensities of emission reduction measures of the sectors (industries) to minimize economic costs of carbon emission reduction under a condition that the carbon emission amount satisfies a budget requirement. Differentiated emission reduction measures are adopted for different sectors and industries. For example, emission reduction measures in the electric power industry are mainly substitution of non-fossil energy power generation for fossil energy power generation, energy-saving retrofitting, and the like; and emission reduction measures in the steel industry include energy-saving retrofitting, fuel switching, and the like.

(3) A carbon sequestration enhancement path optimization module is constructed to achieve overall coordination of the two types of sequestration enhancement approaches. With the carbon sequestration amount time-series trajectory as an input, an optimized carbon sequestration enhancement path is obtained through optimized allocation of carbon sequestration amount demand between technological carbon sequestration and natural carbon sequestration and coordination and optimization of implementation paths of the two types of sequestration enhancement approaches, and whether the optimized carbon sequestration enhancement path is the optimal allocation scheme under the carbon sequestration amount demand is determined; if yes, the optimized carbon sequestration enhancement path is output, and if not, carbon sequestration amount demand allocation and optimization of carbon sequestration enhancement path are performed again.

The technological carbon sequestration is a sequestration enhancement approach in which carbon dioxide is removed from industrial production, energy utilization, or the atmosphere and stored for a long term through carbon capture, utilization, and storage technologies; and the natural carbon sequestration is a sequestration enhancement approach for improving ecological carbon sequestration capacity through measures such as afforestation and vegetation restoration.

The optimized allocation of carbon sequestration amount demand between technological carbon sequestration and natural carbon sequestration refers to, in combination with technical accessibility and economic rationality of the two types of carbon sequestration approaches, first setting an initial value of annual carbon sequestration amount demand allocation, and then performing optimized adjustment on the carbon sequestration amount demand allocation based on comprehensive optimization results of the carbon sequestration enhancement paths under the carbon sequestration amount demand allocation until the objective function value cannot be further improved. The coordination and optimization of the implementation paths of the two types of sequestration enhancement approaches include coordination of the implementation paths among the two types of sequestration enhancement approaches and optimization of implementation paths within each sequestration enhancement approach.

The coordination of the implementation paths between the two types of sequestration enhancement approaches refers to complementary synergistic effects between the two types of sequestration enhancement measures. For example, strengthening forest management and protection (including harvesting and regeneration of mature forests and over-mature forests) can generate more agricultural and forestry biomass for preparing biomass energy and developing carbon capture and storage of biomass energy.

The optimization of the implementation paths within each sequestration enhancement approach refers to adjusting types and implementation intensities of sequestration enhancement measures to minimize economic costs of carbon sequestration enhancement under a condition that the sequestration enhancement amount satisfies predetermined demand.

(4) A carbon emission reduction and carbon sequestration enhancement coordination module is constructed. The carbon emission reduction and carbon sequestration enhancement coordination module respectively transmits the generated carbon emission amount time-series trajectory and the carbon sequestration amount time-series trajectory to the carbon emission reduction path optimization module and the carbon sequestration enhancement path optimization module as inputs of the two inner-layer optimization submodules; aggregates optimization results of the two inner-layer submodules; and performs optimized adjustment on settings of a carbon end-state (i.e., target values of carbon emission amount and carbon sequestration amount in an end year) and carbon trajectories (i.e., time-series trajectories of carbon emission amount and carbon sequestration amount) based on aggregation results so as to perform coordination of carbon emission reduction and carbon sequestration enhancement. The following steps are specifically included.

(4.1) Output results of the carbon emission reduction path optimization module and the carbon sequestration enhancement path optimization module are aggregated, and whether satisfying the synergistically optimal trajectories under given carbon emission amount and carbon sequestration amount targets is determined; if yes, step (4.2) is performed; and otherwise, coordinated optimization of the carbon emission amount and carbon sequestration amount time-series trajectories, namely carbon trajectory optimization, is performed.

The coordinated optimization of carbon emission amount and carbon sequestration amount time-series trajectories refers to, under given carbon emission amount and carbon sequestration amount targets, respectively calculating optimal carbon emission reduction and carbon sequestration enhancement implementation paths by invoking the carbon emission reduction path optimization module and the carbon sequestration enhancement path optimization module, identifying the pair of given carbon emission amount and carbon sequestration amount time-series trajectories with the optimal carbon emission reduction and carbon sequestration enhancement implementation paths, comparing optimal implementation paths under different carbon emission amount and carbon sequestration amount time-series trajectory settings, and searching for carbon emission amount and carbon sequestration amount time-series trajectory settings that improve the objective function value until the objective function value can no longer be improved. During this process, matching between development paths of carbon emission reduction and carbon sequestration enhancement, namely coordination of intermediate trajectories, is required to be considered. This is because a direct coupling relationship exists between carbon emission reduction measures and carbon sequestration enhancement measures. For example, certain carbon capture and storage facilities (a type of carbon sequestration measure) need to be combined with carbon emission sources, and therefore information of carbon emission sources needs to be determined first before carbon sequestration measures can be determined.

(4.2) whether satisfying the synergistically optimal targets of carbon emission amount and carbon sequestration amount under given target values of an end year is determined; if yes, the optimal carbon emission reduction and carbon sequestration enhancement implementation paths are output; otherwise, coordinated optimization of the target values of carbon emission amount and carbon sequestration amount, namely carbon end-state optimization, is performed. During this process, coordination of the target values of the end year needs to be considered, namely division of end-year target tasks between the two fields of carbon emission reduction and carbon sequestration enhancement. The target value of the end year refers to a net emission amount in the end year, namely a difference value between the carbon emission amount and the carbon sequestration amount.

The coordinated optimization of target values of carbon emission amount and carbon sequestration amount refers to determining optimal trajectories of coordination of carbon emission amount and carbon sequestration amount corresponding to each target setting value of carbon emission amount/carbon sequestration amount by aggregating results of lower-layer optimization of the carbon emission amount and carbon sequestration amount time-series trajectories, comparing the optimal trajectories under different target setting values of carbon emission amount/carbon sequestration amount, and searching for target values of carbon emission amount and carbon sequestration amount that improve the objective function value until the objective function value can no longer be improved.

The objective function refers to minimization of risk costs or maximization of risk benefits taking uncertainty factors into consideration, including economic costs related to various carbon emission reduction measures and carbon sequestration enhancement measures, business revenues and costs related to carbon emission and carbon sequestration, and the like. For low-carbon development strategic decision-making at national and regional levels, the objective function refers to minimization of cumulative economic costs within a given planning period: $min F = {\sum }_{i ∈ I} {\sum }_{t ∈ T} {P}_{i} \left(EconCost_{CER}_{t , i}+EconCost_{CES}_{t , i}\right)$ where in the formula, *i*, *I* respectively represent a scenario number and a total number of scenarios; *t*, *T* respectively represent a time-step number and a total number of time steps within a transition period; *Pᵢ* represents a scenario weight and is generally a scenario probability value, and the sum of scenario weights of all scenarios is 1; *EconCost_CER_{t,i}* represents the sum of transition-period costs (construction costs and operation costs) and risk costs caused by various uncertainty factors (such as grid operation risks caused by high-proportion integration of new energy into a power grid) of major carbon emission industries (such as energy, transportation, and industry) at a time step *t* under the *i*-th scenario; and *EconCost_CES_{t,i}* represents the sum of sequestration enhancement costs and risk costs caused by various uncertainty factors (such as leakage risks of carbon dioxide during storage, transportation, and sequestration processes) of natural carbon sequestration (such as forest carbon sequestration) and technological carbon sequestration (such as carbon capture, utilization and storage) at a time step *t* under the *i*-th scenario.

For low-carbon development strategic optimization at the enterprise level, the objective function refers to maximization of cumulative operating revenues within a given planning period: $max F = {\sum }_{i ∈ I} {\sum }_{t ∈ T} {P}_{i} \left({OI}_{t , i}-{OC}_{t , i}\right)$ where in the formula, *OI_{t,i}* represents operating revenue of an enterprise at a time step *t* under the *i*-th scenario, including carbon emission-related business revenue of the enterprise (such as power generation revenue) and carbon sequestration-related business revenue (such as carbon asset revenue obtained through development of forestry carbon sequestration and CCUS); and *OC_{t,i}* represents operating cost of the enterprise at a time step *t* under the *i*-th scenario, including carbon emission-related business costs of the enterprise (such as power generation costs and carbon emission costs of power generation) and carbon sequestration-related business costs (such as costs for developing forestry carbon sequestration and CCUS).

Constituent items of the objective function corresponding to different research objects have certain differences, and specific analysis should be performed for specific objects.

The system for coordinated optimization of carbon emission reduction and carbon sequestration enhancement paths according to the present disclosure includes: a carbon emission reduction path optimization module, configured to obtain an optimized carbon emission reduction path under a given carbon emission amount time-series trajectory through optimized allocation of carbon emission budgets among various sectors/industries and coordination and optimization of carbon emission reduction implementation paths of the various sectors/industries, so as to perform overall coordination within emission reduction measures;
a carbon sequestration enhancement path optimization module, configured to obtain an optimized carbon sequestration enhancement path under a given carbon sequestration amount time-series trajectory through optimized allocation of carbon sequestration amount demand between technological carbon sequestration and natural carbon sequestration and coordination and optimization of implementation paths of the two types of sequestration enhancement approaches, so as to perform overall coordination between the two types of sequestration enhancement approaches; and
a carbon emission reduction and carbon sequestration enhancement coordination module, configured to aggregate optimization results of the carbon emission reduction path optimization module and the carbon sequestration enhancement path optimization module, perform carbon trajectory optimization and carbon end-state optimization based on an objective function, consider matching between development paths of carbon emission reduction and carbon sequestration enhancement and division of a target task between carbon emission reduction and carbon sequestration enhancement, respectively search for carbon emission amount and carbon sequestration amount trajectory settings and target value settings that improve an objective function value until the objective function value can no longer be improved, and output optimal carbon emission reduction and carbon sequestration enhancement implementation paths.

In another implementation example, the above system for coordinated optimization of carbon emission reduction and carbon sequestration enhancement paths includes a processor, and the processor is configured to execute the above program modules stored in a memory, including the carbon emission reduction path optimization module, the carbon sequestration enhancement path optimization module, and the carbon emission reduction and carbon sequestration enhancement coordination module.

## Claims

1. A method for coordinated optimization of carbon emission reduction and carbon sequestration enhancement paths, comprising the following steps:
(1) generating carbon emission amount and carbon sequestration amount time-series trajectories based on given target values of carbon emission amount and carbon sequestration amount;
(2) taking the carbon emission amount time-series trajectory as an input, and constructing a carbon emission reduction path optimization module through optimized allocation of carbon emission budgets among various sectors/industries and coordination and optimization of carbon emission reduction implementation paths of the various sectors/industries;
(3) taking the carbon sequestration amount time-series trajectory as an input, and constructing a carbon sequestration enhancement path optimization module through optimized allocation of carbon sequestration amount demand between technological carbon sequestration and natural carbon sequestration and coordination and optimization of implementation paths of the two types of sequestration enhancement approaches; and
(4) constructing an objective function comprising economic costs associated with various carbon emission reduction measures and carbon sequestration enhancement measures, and based on optimization results of the carbon emission reduction path optimization module and the carbon sequestration enhancement path optimization module, firstly performing carbon trajectory optimization, considering matching between development paths of carbon emission reduction and carbon sequestration enhancement, and searching for carbon emission amount and carbon sequestration amount trajectory settings that improve an objective function value until the objective function value can no longer be improved; and then performing carbon end-state optimization, considering division of a target task between carbon emission reduction and carbon sequestration enhancement, and searching for target values of carbon emission amount and carbon sequestration amount that improve the objective function value until the objective function value can no longer be improved,
wherein the carbon trajectory optimization in step (4) refers to optimizing the carbon emission amount and carbon sequestration amount time-series trajectories under given carbon emission amount and carbon sequestration amount targets, and specifically comprises: calculating optimal carbon emission reduction and carbon sequestration enhancement implementation paths under given carbon emission amount and carbon sequestration amount time-series trajectories, identifying the given carbon emission amount and carbon sequestration amount time-series trajectories with the optimal carbon emission reduction and carbon sequestration enhancement implementation paths, obtaining optimal implementation paths under different carbon emission amount and carbon sequestration amount time-series trajectory settings, and searching therefrom for carbon emission amount and carbon sequestration amount time-series trajectory settings that improve the objective function value until the objective function value can no longer be improved; and
the carbon end-state optimization in step (4) refers to optimization of target values of carbon emission amount and carbon sequestration amount, and specifically comprises: determining optimal trajectories of carbon emission amount and carbon sequestration amount corresponding to each target setting value of carbon emission amount/carbon sequestration amount by aggregating results of optimization of the carbon emission amount and carbon sequestration amount time-series trajectories, comparing the optimal trajectories under different target setting values of carbon emission amount/carbon sequestration amount, and searching for target values of carbon emission amount and carbon sequestration amount that improve the objective function value until the objective function value can no longer be improved.

2. The method for coordinated optimization of carbon emission reduction and carbon sequestration enhancement paths according to claim 1, wherein generating the carbon emission amount and carbon sequestration amount time-series trajectories in step (1) comprises:
the carbon emission amount time-series trajectory comprising a time-series trajectory exogenously generated based on different curve shapes from two points *tₛₜₐᵣₜ*, ${ce}_{start}^{0}$ and *t_{end}*, ${ce}_{end}^{0}$, and the carbon sequestration amount time-series trajectory comprising a time-series trajectory exogenously generated based on different curve shapes from two points *tₛₜₐᵣₜ*, ${cs}_{start}^{0}$ and *t_{end}*, ${cs}_{end}^{0}$, wherein *tₛₜₐᵣₜ*, ${ce}_{start}^{0}$, and ${cs}_{start}^{0}$ respectively represent a start time, and an initial value of carbon emission amount and an initial value of carbon sequestration amount corresponding to the start time; and *t_{end}* , ${ce}_{end}^{0}$, and ${cs}_{end}^{0}$ respectively represent a planning end time, and an initial value of carbon emission amount and an initial value of carbon sequestration amount corresponding to the planning end time.

3. The method for coordinated optimization of carbon emission reduction and carbon sequestration enhancement paths according to claim 1, wherein the coordination and optimization of the carbon emission reduction implementation paths of the various sectors/industries in step (2) comprise coordination of carbon emission reduction implementation paths among the various sectors/industries and optimization of carbon emission reduction implementation paths within the various sectors/industries; the coordination of the carbon emission reduction implementation paths among the various sectors/industries comprises coordination of emission reduction amount tasks and coordination of emission reduction measures, wherein the coordination of emission reduction amount tasks refers to allocation of annual carbon budgets among the various sectors/industries; and the coordination of emission reduction measures refers to maximizing synergistic effects of the emission reduction measures of the various sectors/industries.

4. The method for coordinated optimization of carbon emission reduction and carbon sequestration enhancement paths according to claim 3, wherein the optimization of the carbon emission reduction implementation paths within the various sectors/industries refers to adjusting types and implementation intensities of emission reduction measures of the sectors/industries to minimize economic costs of carbon emission reduction under a condition that the carbon emission amount satisfies a budget requirement.

5. The method for coordinated optimization of carbon emission reduction and carbon sequestration enhancement paths according to claim 1, wherein the technological carbon sequestration in step (3) is a sequestration enhancement approach in which carbon dioxide is removed from industrial production, energy utilization, or the atmosphere and stored for a long term through carbon capture, utilization, and storage technologies; and the natural carbon sequestration is a sequestration enhancement approach for improving ecological carbon sequestration capacity.

6. The method for coordinated optimization of carbon emission reduction and carbon sequestration enhancement paths according to claim 5, wherein the coordination and optimization of the implementation paths of the two types of sequestration enhancement approaches in step (3) comprise coordination of the implementation paths among the two types of sequestration enhancement approaches and optimization of implementation paths within each sequestration enhancement approach; the coordination of the implementation paths among the two types of sequestration enhancement approaches comprises coordination of sequestration enhancement amount tasks and coordination of sequestration enhancement measures, wherein the coordination of sequestration enhancement amount tasks refers to allocation of annual carbon sequestration enhancement demand between the two types of sequestration enhancement approaches; and the coordination of sequestration enhancement measures refers to maximizing complementary synergistic effects between the two types of sequestration enhancement measures.

7. The method for coordinated optimization of carbon emission reduction and carbon sequestration enhancement paths according to claim 6, wherein the optimization of the implementation paths within each sequestration enhancement approach refers to adjusting types and implementation intensities of sequestration enhancement measures to minimize economic costs of carbon sequestration enhancement under a condition that the sequestration enhancement amount satisfies carbon sequestration demand.

8. The method for coordinated optimization of carbon emission reduction and carbon sequestration enhancement paths according to claim 1, wherein the objective function in step (4) refers to minimization of risk costs or maximization of risk benefits taking uncertainty factors into consideration.

9. A system for coordinated optimization of carbon emission reduction and carbon sequestration enhancement paths, the system comprising:
a carbon emission reduction path optimization module, configured to obtain an optimized carbon emission reduction path under a given carbon emission amount time-series trajectory through optimized allocation of carbon emission budgets among various sectors/industries and coordination and optimization of carbon emission reduction implementation paths of the various sectors/industries;
a carbon sequestration enhancement path optimization module, configured to obtain an optimized carbon sequestration enhancement path under a given carbon sequestration amount time-series trajectory through optimized allocation of carbon sequestration amount demand between technological carbon sequestration and natural carbon sequestration and coordination and optimization of implementation paths of the two types of sequestration enhancement approaches; and
a carbon emission reduction and carbon sequestration enhancement coordination module, configured to aggregate optimization results of the carbon emission reduction path optimization module and the carbon sequestration enhancement path optimization module, perform carbon trajectory optimization and carbon end-state optimization based on an objective function, consider matching between development paths of carbon emission reduction and carbon sequestration enhancement and division of a target task between carbon emission reduction and carbon sequestration enhancement, respectively search for carbon emission amount and carbon sequestration amount trajectory settings and target value settings that improve an objective function value until the objective function value can no longer be improved, and output optimal carbon emission reduction and carbon sequestration enhancement implementation paths,
wherein the carbon trajectory optimization is optimization of carbon emission amount and carbon sequestration amount time-series trajectories, comprising: under given carbon emission amount and carbon sequestration amount targets, respectively calculating optimal carbon emission reduction and carbon sequestration enhancement implementation paths by invoking the carbon emission reduction path optimization module and the carbon sequestration enhancement path optimization module, identifying the given carbon emission amount and carbon sequestration amount time-series trajectories with the optimal carbon emission reduction and carbon sequestration enhancement implementation paths, obtaining optimal implementation paths under different carbon emission amount and carbon sequestration amount time-series trajectory settings, and searching therefrom for carbon emission amount and carbon sequestration amount time-series trajectory settings that improve the objective function value until the objective function value can no longer be improved; and
the carbon end-state optimization is coordinated optimization of target values of carbon emission amount and carbon sequestration amount, comprising: determining optimal trajectories of carbon emission amount and carbon sequestration amount corresponding to each target setting value of carbon emission amount/carbon sequestration amount by aggregating results of lower-layer optimization of the carbon emission amount and carbon sequestration amount time-series trajectories, comparing the optimal trajectories under different target setting values of carbon emission amount/carbon sequestration amount, and searching for target values of carbon emission amount and carbon sequestration amount that improve the objective function value until the objective function value can no longer be improved.
